# EUROPÄISCHE PATENTSCHRIFT

(11) **EP 2 876 307 B1**
(45) Veröffentlichungstag und Bekanntmachung des Hinweises auf die Patenterteilung: **09.11.2016**
(21) Anmeldenummer: 14003139.4
(22) Anmeldetag: 11.09.2014
(51) Int. Cl.: F15B 15/14

(54) **Arbeitszylinder und Verfahren zur Montage eines Arbeitszylinders**
cylinder and assembly method for the cylinder
Cylindre et procédé de montage du cylindre

(30) Priorität: 21.10.2013 DE 202013009260 U
(43) Veröffentlichungstag der Anmeldung: 27.05.2015
(73) Patentinhaber: BÜMACH ENGINEERING INTERNATIONAL B.V., 7826 TA Emmen (NL)
(72) Erfinder: Büter, Josef, D-49733 Haren/Altenberge (DE)
(74) Vertreter: Weihrauch, Frank

(56) Entgegenhaltungen:
- DE-A1-102004 059 363
- US-A- 4 594 938

## Beschreibung

Die Erfindung betrifft einen als Schraubzylinder ausgebildeten Arbeitszylinder mit einer Sicherung gegen ein Lösen der Schraubverbindung sowie ein Montageverfahren zur Herstellung eines solchen Arbeitszylinders.

Aus dem Stand der Technik sind Arbeitszylinder, insbesondere hydraulische Arbeitszylinder bekannt, welche ein Zylinderrohr und mindestens ein Verschlussteil aufweisen, wobei das Zylinderrohr und das Verschlussteil zur Montage des Arbeitszylinders miteinander verschraubt werden. Derartige Arbeitszylinder sind auch als sogenannte Schraubzylinder bekannt.

Ein Arbeitszylinder gemäß der Präambel des Anspruchs 1 ist aus der US 4594938 offenbart.

Ein Problem herkömmlicher Schraubzylinder besteht insbesondere darin, dass sich die Schraubverbindung zwischen Zylinderrohr und dem jeweiligen Verschlussteil während der Anwendung des Schraubzylinders lockern oder teilweise lösen kann und somit ein zuverlässiger Betrieb des Schraubzylinders aufgrund auftretender Undichtigkeiten nicht mehr gewährleistet ist.

Um dieses Problem zu lösen sind aus dem Stand der Technik verschiedene Ansätze bekannt.

Ein Lösungsansatz besteht beispielsweise darin, das Verschlussteil mittels einer Sicherungsschraube gegen ein Verdrehen gegenüber dem Zylinderrohr zu sichern.

Hierzu wird in dem Verschlussteil eine Bohrung quer zur Mittenachse des Arbeitszylinders vorgesehen, in welche die Sicherungsschraube eingeschraubt wird.

Die Sicherungsschraube wird in diesem Fall so in der Bohrung angeordnet, dass deren Kopf sowohl das Verschlussteil, als auch das Zylinderrohr abschnittsweise übergreift. Zusätzlich weist die Bohrung hierbei an deren Außenseite eine Senkung auf, welche den Kopf der Sicherungsschraube aufnimmt und welche einen Abschnitt in dem Verschlussteil und einen weiteren Abschnitt in dem Zylinderrohr aufweist.

Durch das Einschrauben der Sicherungsschraube in die Bohrung und ein dadurch bewirktes Anliegen des Schraubenkopfes an der Senkung wird eine formschlüssige Verbindung zwischen dem Kopf der Sicherungsschraube, dem Verschlussteil und dem Zylinderrohr bereitgestellt und so ein unerwünschtes Verdrehen des Verschlussteils gegenüber dem Zylinderrohr verhindert.

Die Senkung kann in diesem Fall bereits vor der Montage des Arbeitszylinders an den jeweilis zu verschraubenden Bauteilen vorgesehen werden, womit jedoch die Bauteile in deren Endlage korrekt zueinander ausgerichtet werden müssen, um die exakte Positionierung der Senkungsabschnitte zueinander zu gewährleisten. Dies erfordert nachteiligerweise eine besonders aufwändige und somit kostenintensive Ausrichtung der zu verschraubenden Bauteile zueinander.

Eine weitere Möglichkeit zur Ausbildung einer solchen Senkung, ohne Berücksichtigung der sich einstellenden Endlage der zu verschraubenden Bauteile miteinander, besteht darin, dass die Senkung erst nach Erreichen der Endlage des Verschlussteils auf dem Zylinderrohr bereitgestellt wird.
Die Bereitstellung der Senkung erfolgt hierbei in der Regel mittels Fräsen, was insbesondere den Nachteil mit sich bringt, dass während des Fräsvorgangs abgetragene Splitter, Spähne oder Ähnliches den Arbeitszylinder und insbesondere das Innere des Zylinderrohres verunreinigen können.
Diese abgetragenen Spanungsteilchen können im ungünstigen Fall während des Betriebs des Arbeitszylinders zu Beschädigungen des Zylinderrohres, des Kolbens oder vorhandener Dichtungselemente führen.
Zur Entfernung der Spanungsteilchen müssen die entsprechenden Teile des Arbeitszylinders nach dem Fräsen gereinigt werden.
Als weiterer Nachteil wird bei dieser Lösung ein zusätzlicher Arbeitsschritt für das Fräsen der Senkung nach der Schraubmontage von Verschlussteil und Zylinderrohr benötigt.

Die Aufgabe der vorliegenden Erfindung besteht somit darin, unter Vermeidung der aufgezeigten Nachteile des Standes der Technik einen verdrehgesicherten Arbeitszylinder mit einem Zylinderrohr und einem Verschlussteil, der als Schraubzylinder ausgebildet ist, bereitzustellen, welcher besonders unkompliziert und kostengünstig hergestellt werden kann, der wieder lösbar ist und welcher gleichzeitig eine lange Lebensdauer sowie eine hohe Betriebssicherheit aufweist. Des Weiteren besteht die Aufgabe der Erfindung darin, ein Verfahren zur Montage eines solchen Arbeitszylinders bereitzustellen.

Die Aufgabe wird im Bezug auf den Arbeitszylinder durch die im Patentanspruch 1 aufgeführten Merkmale und im Bezug auf das Montageverfahren durch die im Patentanspruch 5 aufgeführten Merkmale gelöst. Bevorzugte Weiterbildungen ergeben sich aus den jeweiligen Unteransprüchen.

Ein erfindungsgemäßer Arbeitszylinder weist ein Zylinderrohr mit einem Innengewinde in einem ersten Endbereich, sowie ein Verschlussteil mit einem Außengewinde auf. Ein erfindungsgemäßer Arbeitszylinder kann insbesondere als hydraulischer Arbeitszylinder oder als pneumatischer Arbeitszylinder vorliegen.

Der erste Endbereich beschreibt in diesem Zusammenhang den Abschnitt des Zylinderrohres, welcher dem Verschlussteil zugewandt ist.

Das Verschlussteil ist vorliegend mit dem Zylinderrohr verschraubt, wobei das Innengewinde des Zylinderrohres in das Außengewinde des Verschlussteils eingreift. Das Verschlussteil kann sowohl als Kolbenboden als auch als Führung vorliegen.

Darüber hinaus weist das Verschlussteil erfindungsgemäß eine Bohrung auf, welche quer zur Mittenachse des Arbeitszylinders angeordnet und mit einem Innengewinde versehen ist.

In die Bohrung ist ferner eine Sicherungsschraube eingeschraubt, welche zur Sicherung des Verschlussteils gegen ein unerwünschtes Verdrehen auf dem Zylinderrohr dient.

Der erfindungsgemäße Arbeitszylinder zeichnet sich dadurch aus, dass der Endbereich einen, dem Verschlussteil zugewandten Randabschnitt mit einer Wandungsverjüngung aufweist.
Der Begriff Wandungsverjüngung bezeichnet vorliegend, dass die Wandungsstärke des Zylinderrohres im Bereich des Randabschnitts kleiner ist als im übrigen Bereich des Zylinderrohres.

Als weiteres Merkmal des Arbeitszylinders ist radial zwischen dem Randabschnitt und dem Verschlussteil ein Freiraum ausgebildet.
Der Freiraum kann hierbei umlaufend oder nur abschnittsweise ausgebildet sein.

Die Bohrung des Verschlussteils und die darin angeordnete Sicherungsschraube sind erfindungsgemäß so ausgebildet, dass der Kopf der Sicherungsschraube den Randabschnitt abschnittsweise übergreift. Somit wird eine gleichzeitige Übergreifung des Verschlussteils und des Zylinderrohres durch den Kopf der Sicherungsschraube bereitgestellt.

Darüber hinaus weist der Randabschnitt des erfindungsgemäßen Arbeitszylinders einen lokalen Verformungsabschnitt auf, welcher in den Freiraum zwischen Randabschnitt und Verschlussteil eintritt.
Der Verformungsabschnitt ist als besonderer Vorteil durch den Kopf der Sicherungsschraube mittels des Einschraubvorgangs bereitstellbar. Dies erfolgt, indem auf dem Weg des Erreichens der Endlage der Schraube der Schraubenkopf zunächst in einen Druckkontakt mit dem Randabschnitt gebracht wird und indem durch weiteres Anziehen der Sicherungsschraube diese den Randabschnitt im Bereich des Druckkontakts verformt. Die Verformung erfolgt vorzugsweise als plastische Verformung des Randabschnitts im Bereich der Wandungsverjüngung.
Zudem ist der, durch den Kopf der Sicherungsschraube bereitgestellte, Verformungsabschnitt besonders vorteilhaft so ausgebildet, dass dieser in den Freiraum zwischen Randabschnitt und Verschlussteil eintritt. Auf diese Weise wird bewirkt, dass der Verformungsabschnitt nicht auf das Außengewinde des Verschlussteils trifft und dieses somit durch den Verformungsabschnitt nicht beschädigt wird.

Durch den sich ausbildenden Verformungsabschnitt in Verbindung mit dem Kopf der Sicherungsschraube wird somit auf besonders vorteilhafte Weise ein zusätzlicher Formschluss zwischen dem Kopf der Sicherungsschraube, dem Zylinderrohr und dem Verschlussteil geschaffen, durch welchen die gewünschte Verdrehsicherung des Verschlussteils gegenüber dem Zylinderrohr bereitgestellt wird.

Der hier aufgezeigte Arbeitszylinder bietet gegenüber herkömmlichen Lösungen zum einen den technologischen Vorteil, dass die für den Formschluss notwendige Senkung in dem Zylinderrohr durch den Druckkontakt mit dem Kopf der Sicherungsschraube bereitgestellt wird. Somit entfällt einerseits der sonst übliche, zusätzliche Bearbeitungsschritt des Fräsens der Senkung und andererseits wird durch die spanungsfreie Bereitstellung der Senkung eine Verunreinigung des Verschlussteils und des Zylinderrohres durch abgetragene Spanungsteilchen vermieden.

Zum anderen besteht ein weiterer Vorteil des Arbeitszylinders darin, dass die Senkung erst durch das Anziehen der Sicherungsschraube bereitgestellt wird und somit die Position der Senkung, je nach Winkellage des Verschlussteils gegenüber dem Zylinderrohr, variabel ist. Ein aufwändiges Ausrichten des Verschlussteils gegenüber dem Zylinderrohr vor deren Verschrauben kann somit entfallen.

Zudem kann bei der Verschraubung von Zylinderrohr und Verschlussteil auf ein drehmomentgesteuertes Anziehen anstelle eines positionsgesteuerten Anziehens zurückgegriffen werden.

Durch die erfindungsgemäße Ausbildung der Sicherung gegen Verdrehen des Verschlussteils gegenüber dem Zylinderrohr wird somit ein besonders unkompliziert und gleichzeitig kostengünstig herstellbarer Arbeitszylinder geschaffen, welcher zudem eine hohe Betriebssicherheit gewährleistet.
Durch den erfindungsgemäßen Eintritt des Verformungsabschnittes in den Freiraum zwischen Endabschnitt und Verschlussteil wird zudem eine Beschädigung des Außengewindes des Verschlussteils vermieden, sodass die Verschraubung zwischen Verschlussteil und Zylinderrohr, nach Entfernen der Sicherungsschraube, jederzeit zuverlässig gelöst werden und der Arbeitszylinder somit demontiert werden kann.

In einer besonders vorteilhaften Weiterbildung des Arbeitszylinders ist die Sicherungsschraube als Senkkopfschraube ausgebildet. Zudem weist in dieser Weiterbildung das Verschlussteil an dessen Außenwandung eine Senkung zur Aufnahme des Kopfes der Sicherungsschraube auf.

Die Senkung in dem Verschlussteil ist erfindungsgemäß so ausgebildet, dass der Kopf der Sicherungsschraube gerade soweit von der Senkung aufgenommen wird, dass durch diesen der Verformungsabschnitt in der gewünschten Ausprägung bereitstellbar ist.
Mit anderen Worten wird durch die Ausbildung der Senkung die maximal mögliche Einschraubtiefe der Sicherungsschraube in der Bohrung des Verschlussteils begrenzt.

Die Senkung übt somit, auf besonders unkomplizierte und zudem kostengünstige Art und Weise, eine Mehrfachfunktion aus. Zum einen wird durch die Senkung der Kopf der Sicherungsschraube soweit aufgenommen, dass dieser die Außenwandung des Verschlussteils nicht störend überragt und zum anderen wird durch die Senkung die Einschraubtiefe der Sicherungsschraube auf das erforderliche Maß begrenzt und somit das Verformungsmaß des Verformungsabschnitts definiert. Zum dritten kann die Sicherungsschraube mit einem solchen Drehmoment angezogen werden, dass die axial wirkende Kraft größer sein kann als die von der Wandungsverjüngung der Verformung entgegenwirkende Kraft, so dass ein fester Sitz der Sicherungsschraube gewährleistet ist.

In einer vorteilhaften Variante des Arbeitszylinders wird die Wandungsverjüngung durch einen beidseitigen Einzug des Randabschnitts gebildet.
Eine derartige Ausbildung der Wandungsverjüngung bietet insbesondere den technologischen Vorteil, dass einerseits die Wandungsverjüngung gegenüber der Außenwandung des Zylinderrohres soweit zurückgesetzt ist, dass die Sicherungsschraube ausreichend weit in die Bohrung eingeschraubt werden kann, um einen unerwünschten Überstand des Schraubenkopfes über die Außenwandung des Zylinderrohres und des Verschlussteils zu vermeiden.
Andererseits ist die Wandungsverjüngung gegenüber der Innenwandung des Zylinderrohres soweit zurückgesetzt, dass dort ein Freiraum vorliegt und somit die erforderliche Ausprägung des Verformungsabschnittes jederzeit gewährleistet werden kann.

Eine weitere vorteilhafte Variante des Arbeitszylinders sieht vor, dass der Verformungsabschnitt gegenüber dem Außendurchmesser des Außengewindes des Verschlussteils zurückgesetzt ist.

Hierdurch wird auf besonders vorteilhafte Weise bewirkt, dass der Verformungsabschnitt nicht auf das Außengewinde des Verschlussteils einwirkt, sodass eine Beschädigung des Außengewindes durch den Verformungsabschnitt bei einem Ausschrauben des Verschlussteils aus dem Zylinderrohr wirkungsvoll verhindert wird.

Die Verschraubung zwischen Verschlussteil und Zylinderrohr kann somit, nach Lösen, beziehungsweise Entfernen der Sicherungsschraube, jederzeit gelöst und der Arbeitszylinder bei Bedarf demontiert werden.

Ein erfindungsgemäßes Verfahren zur Bereitstellung eines Arbeitszylinders sieht folgende Verfahrensschritte vor:
a) Verschrauben des Verschlussteils mit dem Zylinderrohr, wobei das Außengewinde des Verschlussteils in das Innengewinde des Zylinderrohres eingreift,
b) Einschrauben einer Sicherungsschraube in die Bohrung, wobei der Kopf der Sicherungsschraube den Randabschnitt abschnittsweise übergreift,
c) Anziehen der Sicherungsschraube, wobei durch den Kopf der Sicherungsschraube, mittels Verformung, ein lokaler Verformungsabschnitt des Randabschnitts bereitgestellt wird und wobei der Verformungsabschnitt in den Freiraum eintritt und wobei sich zwischen dem Kopf der Sicherungsschraube und dem Verformungsabschnitt ein Formschluss einstellt.

In dem ersten Verfahrensschritt a) erfolgt die Zusammenführung von Zylinderrohr und Verschlussteil, wobei die beiden Kopplungspartner derart miteinander verschraubt werden, dass das Außengewinde des Verschlussteils in das Innengewinde des Zylinderrohres eingreift.
Die Verschraubung beider Kopplungspartner miteinander kann hierbei sowohl drehmoment-, als auch positions- oder winkelgesteuert erfolgen. Vorzugsweise wird vorliegend ein drehmomentgesteuertes Anziehen angewendet.

Nach Erreichen der Endlage des Verschlussteils auf, beziehungsweise in dem Zylinderrohr wird die Sicherungsschraube in die Bohrung des Verschlussteils eingeschraubt.

Die Bohrung ist hierbei so in dem Verschlussteil angeordnet, dass durch das Einschrauben der Sicherungsschraube eine abschnittsweise Übergreifung des Randabschnitts durch den Kopf der Sicherungsschraube hergestellt wird.
Das Einschrauben gemäß Verfahrensschritt b) wird solange fortgesetzt, bis der Kopf der Sicherungsschraube auf dem Randabschnitt aufliegt.

Im Anschluss erfolgt in Verfahrensschritt c) das Anziehen der Sicherungsschraube, wobei durch den Kopf der Sicherungsschraube eine Presskraft auf den Randabschnitt ausgeübt wird. Diese Presskraft führt im weiteren Verlauf dazu, dass sich der Randabschnitt in dem Bereich, in welchem der Kopf der Sicherungsschraube auf den Randabschnitt einwirkt, lokal verfomt und sich der erfindungsgemäße Verformungsabschnitt ausbildet.
Der Verformungsabschnitt weist vorliegend eine, dem Kopf der Sicherungsschraube angepasste Form auf und tritt erfindungsgemäß in den Freiraum zwischen Verschlussteil und Randabschnitt ein.
Zwischen dem Verformungsabschnitt und der Sicherungsschraube stellt sich, als besonderer technologischer Vorteil, ein Formschluss ein, durch welchen eine Sicherung gegen ein unerwünschtes Ausdrehen des Verschlussteils aus dem Zylinderrohr bereitgestellt wird.

Der besondere Vorteil des Verfahrens liegt hierbei in der Bereitstellung des Verformungsabschnittes und des Formschlusses zwischen Zylinderrohr und Sicherungsschraube und zwischen Verschlussteil und Sicherungsschraube. Hierbei wird zum einen der Formschluss gleichzeitig mit dem Bereitstellen des Verformungsabschnittes hergestellt, sodass auf einen, sonst üblichen, separaten Bearbeitungsschritt zur Bereitstellung eines, einen Formschluss ermöglichenden, Abschnittes des Zylinderrohres, beispielsweise mittels Fräsung, verzichtet werden kann.
Zum anderen ermöglicht es das Verfahren, dass die Position des Verformungsabschnitts, je nach Endlage des Verschlusselements, variabel ausbildbar ist. Ein aufwändiges Ausrichten des Verschlussteils gegenüber dem Zylinderrohr vor der Montage des Arbeitszylinders kann somit entfallen, sodass das Verschrauben von Verschlussteil und Zylinderrohr auch drehmomentgesteuert durchgeführt werden kann.
Durch ein solches Verfahren können somit sowohl der notwendige Zeitbedarf als auch die anfallenden Kosten für die Bereitstellung des Arbeitszylinders gegenüber herkömmlichen Herstellungsverfahren gesenkt werden.

Als weiterer Vorteil kommt es bei dem hier aufgeführten Verfahren nicht zu einer Verunreinigung der Arbeitszylinderelemente während der Bereitstellung des Verformungsabschnittes.
Ein sonst üblicher Reinigungsvorgang, welcher bei einer Bereitstellung eines, den Formschluss ermöglichenden, Abschnitts des Zylinderrohres durch spanende Bearbeitungsverfahren notwendig ist, kann somit ebenfalls entfallen.
Zudem besteht vorliegend nicht die Gefahr, dass während der Bereitstellung des Verformungsabschnittes Spanungsreste ins Innere des Zylinderrohres gelangen können.

Eine vorteilhafte Weiterbildung des Verfahrens besteht darin, dass nach dem Verfahrensschritt a) ein zusätzlicher Verfahrensschritt a1) durchgeführt wird.
In Verfahrensschritt a1) erfolgt vorliegend ein drehmomentgesteuertes Fortsetzen des Verschraubens des Verschlussteils mit dem Zylinderrohr bis zum Erreichen eines vorgegebenen Anziehdrehmoments.

Der besondere Vorteil der hier aufgeführten Weiterbildung ergibt sich in Verbindung mit der positionsvariablen Ausbildbarkeit des Verformungsabschnittes, durch welche es ermöglicht wird, dass zuerst das gewünschte Anziehdrehmoment zwischen Verschlussteil und Zylinderohr eingestellt werden kann und erst im Anschluss daran der Verformungsabschnitt an der sich einstellenden Position der Bohrung des Verschlussteil ausgebildet wird.

Ein erfindungsgemäßer Arbeitszylinder wird als Ausführungsbeispiel anhand von
- Fig. 1: geschnittene Prinzipdarstellung
- Fig. 2: Draufsicht Zylinderrohr mit Verformungsabschnitt
näher erläutert.

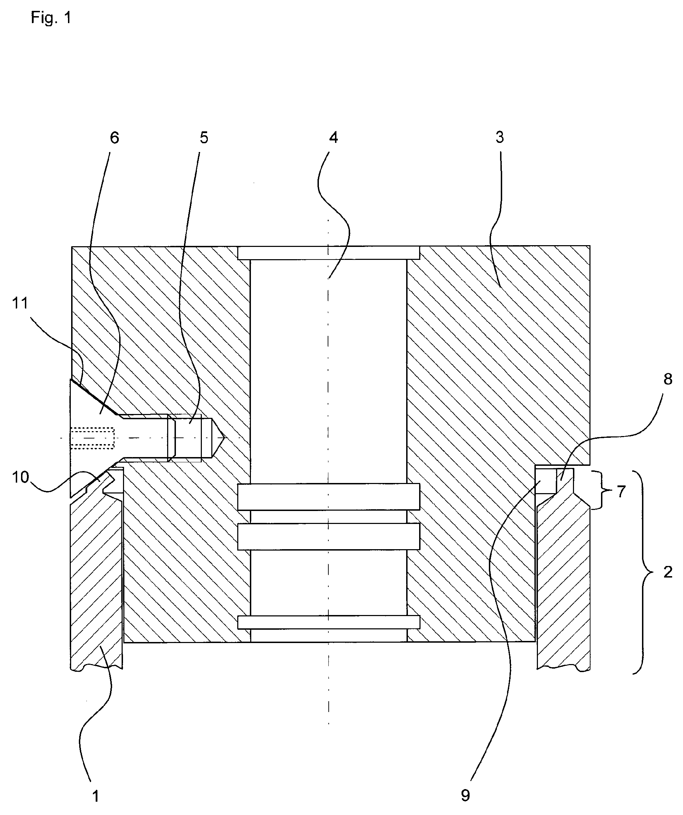

Der Arbeitszylinder weist gemäß Fig. 1 ein Zylinderrohr 1 und ein Verschlussteil 3 auf. Das Zylinderrohr 1 weist in einem ersten Endbereich 2 ein Innengewinde auf, wohingegen das Verschlussteil 3 ein Außengewinde aufweist.
Zur Vereinfachung sowie zur besseren Übersichtlichkeit wird vorliegend auf die Darstellung des Innen- und des Außengewindes verzichtet.
Zudem sind vorhandene Druckanschlüsse des Arbeitszylinders in Fig. 1 nicht dargestellt, da sich diese im Ausführungsbeispiel außerhalb der Schnittebene befinden.

Das Zylinderrohr 1 ist mit dem Verschlussteil 3 derart verschraubt, dass das Außengewinde des Verschlussteils 3 in das Innengewinde des Zylinderrohres 1 eingreift.
Das Verschlussteil 3 ist vorliegend als sogenanntes Führungsverschlussteil ausgebildet, welches bei einer späteren Anwendung des Arbeitszylinders zur Führung einer entsprechenden Kolbenstange (nicht dargestellt) dient. Erfindungsgemäß weist zudem das Verschlussteil 3 eine Bohrung 5 auf, welche quer zur Mittenachse 4 des Arbeitszylinders angeordnet ist.
Die Bohrung 5 weist ein Innengewinde (nicht dargestellt) auf und dient vorliegend zur Aufnahme einer Sicherungsschraube 6.
Die Bohrung 5 ist darüber hinaus derart in dem Verschlussteil 3 angeordnet, dass die Sicherungsschraube 6 so einschraubbar ist, dass deren Kopf sowohl das Verschlussteil 3 als auch einen Randabschnitt 7 des Endbereichs 2 abschnittsweise übergreift.

Der Randabschnitt 7 stellt vorliegend den, dem Verschlussteil 3 zugewandten Abschnitt des Randbereichs 2 dar und weist erfindungsgemäß eine Wandungsverjüngung 8 auf.
Die Wandungsverjüngung 8 wird im vorliegenden Ausführungsbeispiel durch einen beidseitigen Einzug des Randabschnitts 7 gebildet.
Durch die erfindungsgemäße Ausbildung der Wandungsverjüngung 8 wird vorliegend ein Freiraum 9 zwischen dem Verschlussteil 3 und dem Zylinderrohr 1 bereitgestellt.

Der erfindungsgemäße Arbeitszylinder weist des Weiteren im Bereich der Sicherungsschraube 6 einen Verformungsabschnitt 10 auf.
Der Verformungsabschnitt 10 wird als besonderer technologischer Vorteil durch den Kopf der Sicherungsschraube 6 bereitgestellt, indem der Kopf während es Anziehens der Sicherungsschraube 6 im Bereich der Wandungsverjüngung 8 eine Presskraft auf den Randabschnitt 7 aufbringt. Durch diese Presskraft wird eine lokale, plastische Verformung des Randabschnitts 7 bewirkt und so der erfindungsgemäße Verformungsabschnitt 10 bereitgestellt.

Nach dem Anziehen der Sicherungsschraube 6 liegt zwischen dieser und dem ausgebildeten Verformungsabschnitt 10 ein Formschluss vor. Durch diesen Formschluss wird auf besonders vorteilhafte Art und Weise eine zusätzliche Sicherung gegen ein unerwünschtes Ausdrehen des Verschlussteils 3 aus dem Zylinderrohr 1 bereitgestellt, durch welche insbesondere die Betriebssicherheit des erfindungsgemäßen Arbeitszylinders erhöht werden kann.

In einer besonders vorteilhaften Ausführungsform des Arbeitszylinders ist die Sicherungsschraube 6 als Senkkopfschraube ausgebildet. Zudem weist das Verschlussteil 3 an dessen Außenwandung eine Senkung 11 auf, durch welche der Kopf der Sicherungsschraube 6 aufgenommen wird.

Die Senkung 11 ist besonders vorteilhaft so ausgebildet, dass die Sicherungsschraube 6 bis zu der, für die Bereitstellung des Verformungsabschnittes 10 erforderlichen, Einschraubtiefe in die Bohrung 5 eingeschraubt werden kann.
Die Senkung 11 übernimmt in diesem Zusammenhang eine Doppelfunktion, indem zum einen der Kopf der Sicherungsschraube 6 soweit aufgenommen wird, dass dieser die Außenwandung des Verschlussteils 3 und die Außenwandung des Zylinderrohres 1 nicht störend überragt und dass zum anderen die maximale Einschraubtiefe der Sicherungsschraube 6 durch die Senkung 11 festgelegt wird.

Eine weitere vorteilhafte Ausführungsform des Arbeitszylinders sieht vor, dass der Verformungsabschnitt 10 in den Freiraum 9 zwischen Verschlussteil 3 und Endabschnitt 7 eintritt und dabei gegenüber dem Außendurchmessser des Außengewin-des des Verschlussteils 3 zurückgesetzt ist.
Mit dem Begriff zurückgesetzt wird in diesem Zusammenhang beschrieben, dass nach Erreichen der Endlage der Sicherungsschraube 6 in der Bohrung 5 zwischen dem Verformungsabschnitt und dem Außengewinde des Verschlussteils 3 ein Abstand verbleibt.
Auf diese Weise wird als besonderer Vorteil eine Beschädigung des Außengewindes des Verschlussteils 3 durch den Verformungsabschnitt 10 verhindert, sodass ein nachträgliches Lösen der Verschraubung zwischen Verschlussteil 3 und Zylinderrohr 1, nach Entfernen der Sicherungsschraube 6, jederzeit gewährleistet werden kann.

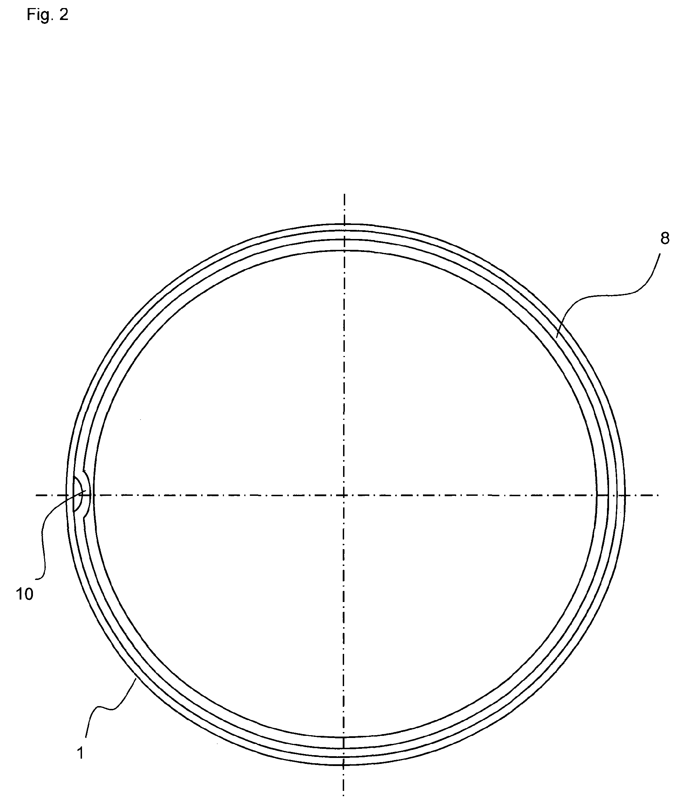

Fig. 2 zeigt ergänzend eine Draufsicht, wobei zur besseren Erkennbarkeit nur das Zylinderrohr 1 mit dem Verformungsabschnitt 10, nicht jedoch das Verschlussteil 3 sowie die Sicherungsschraube 6 dargestellt sind.

### Verwendete Bezugszeichen

- 1: Zylinderrohr
- 2: Endbereich
- 3: Verschlussteil
- 4: Mittenachse
- 5: Bohrung
- 6: Sicherungsschraube
- 7: Randabschnitt
- 8: Wandungsverjüngung
- 9: Freiraum
- 10: Verformungsabschnitt
- 11: Senkung

## Patentansprüche

1. Arbeitszylinder, aufweisend ein Zylinderrohr (1) mit einem Innengewinde in einem ersten Endbereich (2), und aufweisend ein Verschlussteil (3) mit einem Außengewinde, wobei das Verschlussteil (3) mittels des Außengewindes mit dem Innengewinde des Zylinderrohres (1) verschraubt ist, und wobei das Verschlussteil (3) eine, quer zur Mittenachse (4) des Arbeitszylinders angeordnete, Bohrung (5) mit einem Innengewinde aufweist, und wobei in die Bohrung (5) eine Sicherungsschraube (6) eingeschraubt ist, wobei der Endbereich (2) einen, dem Verschlussteil (3) zugewandten Randabschnitt (7) aufweist, wobei der Randabschnitt (7) eine Wandungsverjüngung (8) aufweist, und dass radial zwischen dem Randabschnitt (7) und dem Verschlussteil (3) ein Freiraum (9) ausgebildet ist, und dass der Kopf der Sicherungsschraube (6) den Randabschnitt (7) abschnittsweise übergreift, **dadurch gekennzeichnet, dass** der Randabschnitt (7) einen lokalen Verformungsabschnitt (10) aufweist, wobei der Verformungsabschnitt (10) durch den Kopf der Sicherungsschraube (6), mittels Einschrauben der Sicherungsschraube (6) und durch Verformung des Randabschnitts (7), bereitstellbar ist, und wobei der Verformungsabschnitt (10) in den Freiraum (9) eintritt, und dass zwischen dem Kopf der Sicherungsschraube (6) und dem Verformungsabschnitt (10) ein Formschluss vorliegt.

2. Arbeitszylinder nach Anspruch 1,
**dadurch gekennzeichnet,**
**dass** die Sicherungsschraube (6) als Senkkopfschraube ausgebildet ist, wobei das Verschlussteil (3) in dessen Außenwandung eine Senkung (11) zur Aufnahme des Kopfes der Sicherungsschraube (6) aufweist.

3. Arbeitszylinder nach Anspruch 1 und 2,
**dadurch gekennzeichnet,**
**dass** die Wandungsverjüngung (8) radial durch einen beidseitigen Einzug des Randabschnitts (7) gebildet wird.

4. Arbeitszylinder nach einem der vorhergehenden Ansprüche,
**dadurch gekennzeichnet,**
**dass** der Verformungsabschnitt (10) gegenüber dem Außendurchmessser des Außengewindes des Verschlussteils (3) zurückgesetzt ist.

5. Verfahren zur Montage eines Arbeitszylinders, wobei der Arbeitszylinder ein Zylinderrohr und mindestens ein Verschlussteil aufweist, und wobei das Zylinderrohr in einem ersten Endbereich ein Innengewinde und das Verschlussteil ein Außengewinde aufweisen, und wobei der Endbereich einen, dem Verschlussteil zugewandten Randabschnitt aufweist, wobei der Randabschnitt eine Wandungsverjüngung aufweist und wobei radial zwischen dem Randabschnitt und dem Verschlussteil ein Freiraum ausgebildet ist, und wobei das Verschlussteil eine, quer zur Mittenachse des Arbeitszylinders angeordnete, Bohrung mit einem Innengewinde aufweist, **gekennzeichnet durch** die folgenden Verfahrensschritte:
a) Verschrauben des Verschlussteils mit dem Zylinderrohr, wobei das Außengewinde des Verschlussteils in das Innengewinde des Zylinderrohres eingreift,
b) Einschrauben einer Sicherungsschraube in die Bohrung, wobei der Kopf der Sicherungsschraube den Randabschnitt abschnittsweise übergreift,
c) Anziehen der Sicherungsschraube, wobei **durch** den Kopf der Sicherungsschraube, mittels Verformung, ein lokaler Verformungsabschnitt des Randabschnitts bereitgestellt wird und wobei der Verformungsabschnitt in den Freiraum eintritt und wobei sich zwischen dem Kopf der Sicherungsschraube und dem Verformungsabschnitt ein Formschluss einstellt.

6. Verfahren nach Anspruch 5,
**dadurch gekennzeichnet,**
**dass** nach dem Verfahrensschritt a) ein zusätzlicher Verfahrensschritt a1) durchgeführt wird, wobei im Verfahrensschritt a1) ein drehmomentgesteuertes Fortsetzen des Verschraubens bis zum Erreichen eines vorgegebenen Anziehdrehmoments erfolgt.

## Claims

1. Working cylinder comprising a cylinder tube (1) with an internal thread in a first end region (2) and comprising a closing component (3) with an external thread, and the closing component (3) is screwed via its external thread into the internal thread of the cylinder tube (1),
the closing component (3) has a bore (5) with an internal thread that is arranged transversally to the center axis (4) of the working cylinder (1), a safety screw (6) is screwed into the borne (5), the end region (2) comprises an edge (7), which faces the closing component (3) and has a tapered wall (8), and a free space (9) is formed radially between the edge (7) and the closing component (3), the head of the safety screw (6) overlaps the edge (7) in sections,
**characterized in that**
the edge (7) has a local deformation segment (10), and said deformation segment (10) can be produced by the head of the safety screw (6) by means of screwing-in the safety screw (6) and by deforming the edge (7), the deformation segment (10) enters into the free space (9), and the head of the safety screw (6) and the deformation segment (10) are positively connected with each other.

2. Working cylinder according to claim 1,
**characterized in that**
the safety screw (6) is designed as a countersunk screw and the outer wall of the closing component (3) has a countersink for receiving the head of the safety screw (6).

3. Working cylinder according to claims 1 and 2,
**characterized in that**
the tapered wall (8) is radially formed by a retraction of the edge (7) on both sides.

4. Working cylinder according to one of the previous claims,
**characterized in that**
the deformation segment (10) is recessed relatively to the outer diameter of the external thread of the closing component (3).

5. Method for assembling a working cylinder, with the working cylinder comprising a cylinder tube and at least one closing component, and the cylinder tube has an internal thread in a first end region and the closing component has an external thread, the end region is comprises an edge, which faces the closing component and has a tapered wall, a free space is formed between the edge and the closing component, and the closing component has a bore, which is arranged transversally to the center axis of the working cylinder and has an internal thread, wherein said method is **characterized by** the following procedural steps:
a) screwing the closing component into the cylinder tube such that the external thread of the closing component engages into the internal thread of the cylinder tube,
b) screwing a safety screw into the bore such that the head of the safety screw overlaps the edge in sections,
c) tightening the safety screw whereby the head of the safety screw produces, by deformation, a local deformation segment of the edge, the deformation segment enters into the free space, and the head of the safety screw and the deformation segment are positively connected with each other.

6. Method according to claim 5,
wherein
an additional procedural step a1) is carried out after the procedural step a), and in the procedural step a1) screwing is continued until a predetermined tightening torque is reached.

## Revendications

1. Cylindre de travail comprenant un tube cylindrique (1) avec un filet intérieur dans une première zone d'extrémité (2) et comprenant un élément d'obturation (3) avec un filet extérieur, le filet extérieur de l'élément d'obturation (3) étant vissé sur le filet intérieur du tube cylindrique (1),
et l'élément d'obturation (3) étant muni d'un trou disposé transversalement à l'axe central (4) du cylindre de travail (5) avec un filet intérieur, et une vis de blocage (6) étant vissées dans le trou (5), et
la zone d'extrémité (2) étant munie d'une partie de bord (7), la partie de bord (7) comportant une partie conique de la paroi (8), et un espace libre (9) étant formé radialement entre la partie de bord (7) et l'élément d'obturation (3), et la tête de la vis de blocage (6) recouvrant la partie de bord (7) par section, est **caractérisé en ce que** la partie de bord (7) est munie d'une partie déformante locale (10), la partie déformante (10) se formant par la tête de la vis de blocage (6) en vissant cette vis de blocage et en déformant la partie de bord (7), la partie déformante (10) entrant dans l'espace libre (9) et une complémentarité de forme se produisant entre la tête de la vis de blocage (6) et la partie déformante (10).

2. Cylindre de travail suivant la revendication 1
est **caractérisée en ce que**
la vis de blocage (6) est une vis à tête fraisée et la paroi extérieure de son élément d'obturation (3) est muni d'une cavité (11) pour le logement de la tête de la vis de blocage (6).

3. Cylindre de travail suivant la revendication 1 et 2
est **caractérisé en ce que**
la partie conique de la paroi (8) est constituée radialement par un renfoncement de la partie de bord (7) sur le deux côtés.

4. Cylindre de travail suivant une des revendications précédentes
est **caractérisé**
**en ce que** la partie déformante (10) est en retrait par rapport au diamètre extérieur du filet extérieur de l'élément d'obturation (3).

5. Procédé pour le montage d'un cylindre de travail, le cylindre de travail comprenant un tube cylindrique et au moins un élément d'obturation, et le tube cylindrique comprenant un filet intérieur dans une première zone d'extrémité, et l'élément d'obturation comprenant un filet extérieur, et la zone d'extrémité étant munie d'une partie de bord sur son côté tourné vers l'élément d'obturation, et la partie de bord comportant une partie conique de la paroi, et un espace libre étant formé radialement entre la partie de bord et l'élément d'obturation, et l'élément d'obturation comportant un trou avec un filet intérieur disposé transversalement à l'axe central,
est **caractérisé par** les suivantes étapes de procédé:
a) Boulonnage de l'élément d'obturation sur le tube cylindrique, le filet extérieur de l'élément d'obturation en s'engageant dans le filet intérieur du tube cylindrique,
b) Vissage d'une vis de blocage dans le trou, la tête de la vis de blocage recouvrant la partie de bord par sections,
c) Serrage de la vis de blocage, la tête de la vis de blocage fournissant une partie déformante de la partie de bord au moyen de déformation et la partie déformante entrant dans l'espace libre et une complémentarité de forme se produisant entre la tête de la vis de blocage et la partie déformante.

6. Procédé suivant la revendication 5,
est **caractérisé en ce**
**qu'**une étape de procédé supplémentaire a1) est effectuée après l'étape de procédé a) et que cet étape de procédé a1) inclut le boulonnage continu à couple défini jusqu'à obtenir le couple de serrage spécifié.
